# EUROPÄISCHE PATENTSCHRIFT

(11) **EP 2 337 670 B1**
(45) Veröffentlichungstag und Bekanntmachung des Hinweises auf die Patenterteilung: **24.04.2019**
(21) Anmeldenummer: 08874922.1
(22) Anmeldetag: 18.09.2008
(51) Int. Cl.: B29C 70/38, B29C 65/00, B29C 65/16, B30B 5/02, B30B 5/04, B29C 65/14, B29C 65/18, B29C 65/26, B29C 65/72, B29K 71/00, B29K 105/06, B29K 307/00, B29K 101/12

(54) **VERFAHREN UND VORRICHTUNG ZUR HERSTELLUNG VON VERBUNDWERKSTOFFBAUTEILEN SOWIE ANDRUCKEINHEIT**
METHOD AND DEVICE FOR PRODUCING COMPOSITE MATERIAL COMPONENTS AND CONTACT PRESSURE UNIT
PROCÉDÉ ET DISPOSITIF DE FABRICATION D'ÉLÉMENTS EN MATÉRIAU COMPOSITE AINSI QU'UNITÉ DE PRESSION

(43) Veröffentlichungstag der Anmeldung: 29.06.2011
(73) Patentinhaber: Fraunhofer-Gesellschaft zur Förderung der angewandten Forschung e.V., 80686 München (DE)
(72) Erfinder: STEYER, Martin, 52223 Breinig (DE); SCHMITZ, Sebastian, Dubai - U.A.E (AE); KÖLZER, Patrick, 56170 Bendorf (DE)
(74) Vertreter: Naeven, Ralf
(86) Internationale Anmeldenummer: PCT/DE2008/001551
(87) Internationale Veröffentlichungsnummer: WO 2010/031364

(56) Entgegenhaltungen:
- EP-A- 1 306 196
- EP-A- 1 479 507
- DE-A1- 2 641 175
- DE-U1-202006 014 872
- GB-A- 2 284 174
- US-A- 5 078 821
- US-A1- 2006 028 612
- US-B1- 6 451 152

## Beschreibung

Die Erfindung betrifft ein Verfahren zur Herstellung von Verbundwerkstoffbauteilen gemäß dem Oberbegriff des Anspruchs 1 sowie eine Vorrichtung zur Herstellung von Verbundwerkstoffbauteilen gemäß dem Oberbegriff des Anspruchs 3.

In vielen Anwendungsbereichen, z. B. in der Luft- und Raumfahrttechnik haben sich Hochleistungsfaserverbundbauteile etabliert, die überall dort, wo geringes Gewicht bei gleichzeitig hoher mechanischer Belastbarkeit gefordert wird, besonders geeignet sind. Die Hochleistungsfaserverbundbauteile werden durch Ablegen endlos faserverstärkter thermoplastischer Prepregs erzeugt. Mit Prepreg (pre impregnated fibers) bezeichnet man ein Halbzeug aus Endlosfasern in einer Kunststoffmatrix. Der Einsatz dieser Werkstofftechnologie ist derzeit jedoch insbesondere wegen der hohen Fertigungskosten gering. Beim Prepreg-Legeverfahren werden zumeist Prepreg-Bänder, so genannte Tapes vorgeschoben, auf eine Form angedrückt, automatisiert abgelegt und nach der Ablage geschnitten. Zur Herstellung von flächigen Bauteilen, werden mehrere Prepreg-Bänder nebeneinander Stoß an Stoß abgelegt. Die Dicke des Bauteils wird durch Ablegen mehrerer Lagen übereinander erzeugt. Auf diese Weise können auch lokale Bauteilverstärkungen erreicht werden.

Die DE 690 05 392 T2 offenbart, für die Herstellung von Verbundwerkstoffbauteilen z. B. bandförmiges Material auf eine Ablagefläche eines noch unfertigen Bauteils abzulegen. Dabei wird das abgelegte Material mit einer Andruckeinheit auf die Ablagefläche gepresst. Um ein hinreichendes und gleichmäßiges Anpressen auch bei komplexen Oberflächen, z. B. mit konkaven oder konvexen Bereichen, durchführen zu können, wird eine Andruckeinheit mit einem flexibel-elastischen Andruckkissen eingesetzt, das z.B. aus einem Elastomer besteht. Das Elastomer ist unmittelbar auf einer Welle gelagert, die quer zur Längsachse ebenfalls elastisch ist. Hiermit lassen sich konkave oder konvexe Oberflächenbereiche des Verbundwerkstoffbauteils bearbeiten.

Nachteilig ist jedoch, dass das eingesetzte Elastomer des Umfangsmaterials der Andruckeinheit nur geringfügig temperaturbeständig ist. Bei einem Silikonkautschuk, wie er auf Seiten der Anmelderin eingesetzt wurde, nämlich der zum Anmeldezeitpunkt von der Wacker Chemie AG Wacker-Silicone, München, unter der Bezeichnung ELASTOSIL® RT 625 vertriebene, sind bei Temperaturen oberhalb 215° C die mechanischen Eigenschaften des Materials nicht mehr hinreichend, um das gewünschte Andrücken zu ermöglichen. Gerade beim Ablegen von thermoplastischem Material wird dieses aber in der Regel auf Temperaturen oberhalb der vorgenannten Grenze erhitzt. Der Einsatz der bekannten Andruckeinheit ist daher mit dem im Stand der Technik offenbarten Verfahren möglicherweise für duroplastische Prepregs geeignet, nicht hingegen für thermoplastische Prepregs.

Weitere Nachteile ergeben sich bei Unebenheiten der zu bearbeitenden Fläche, deren räumliche Ausdehnung deutlich kleiner als die der Längsachse der Andruckeinheit ist. Dann kann die bekannte Andruckeinheit eine Oberfläche mit wechselnd konvexen und konkaven Bereichen nicht mit einem gleichmäßigen Anpressdruck beaufschlagen. Aber auch bei rein konvexen Oberflächenbereichen können beim Andrückprozess lokal unterschiedliche Anpressdrücke erzeugt werden. Denn dort, wo aufgrund der Unebenheit das Elastomer des Umfangsmaterials stärker zusammengepresst wird, wird lokal auch ein höherer Druck erzeugt. Bei stark konkaven Oberflächenbereichen kann es trotz der Flexibilität des Andruckkissens und der Rolle Muldenbereiche geben, die vom Andruckkissen nicht oder nur mit unzureichendem Anpressdruck erreicht werden. Deutliche Pressdruckunterschiede innerhalb einer parallel zur Drehachse des Andruckkissens verlaufenden Kontaktlinie zwischen Andruckkissen und Prepregband sind jedoch unerwünscht.

Aus der DE 10 2006 058 097 A1 sind ein Verfahren sowie eine Vorrichtung zur Herstellung von Verbundwerkstoffbauteilen bekannt, wobei zum einen eine Andruckeinheit mit einer festen Walze offenbart ist, die auf ihrem äußeren Umfang eine geometrieadaptive Auflage aus einem elastischen Kunststoff aufweist. Die Flexibilität ist eingeschränkt, da die Dicke der Kunststoffschicht relativ gering im Vergleich zum Umfang der Walze ist. Die Andruckeinheit kann über ein durch die Walze hindurch strömendes Fluid gekühlt werden. Ein Kontakt zwischen dem Fluid und der Kunststoffschicht ist nicht offenbart.

Die DE 10 2006 058 097 A1 offenbart zum anderen eine Andruckeinheit, die eine Vielzahl ferromagnetischer ringförmiger Lamellen aufweist, die parallel zueinander und nebeneinander gelagert sind und an ihrem Umfang jeweils eine elastische Auflage aufweisen können. Ein elektromagnetisches Feld zwingt die Lamellen in Richtung auf die zu konsolidierende Prepregschicht. Da die Lamellen gegeneinander bewegbar sind, passt sich die durch die Lamellen definierte Oberfläche der Form des Prepregs an. Nachteilig ist hier, dass die durch Lamellen definierte Oberfläche im Falle einer Krümmung aufgrund der seitlichen Ausdehnung der einzelnen Lamellen stufenförmig sein muss und somit eine vollkommene Anpassung an einen gekrümmten Verlauf nicht möglich ist. Zudem hängt der von den Lamellen lokal auf die zu konsolidierende Prepregschicht ausgeübte Druck auch von der Wechselwirkung benachbarter Lamellen ab und kann z.B. durch ungewünschte Störungen in der Reibung zwischen benachbarten Lamellen zu schädlichen Druckunterschieden entlang der Kontaktlinie zwischen Andruckeinheit und Prepregschicht führen. Die Art und Weise der Erwärmung des Prepregmaterials ist nicht dargelegt.

Aus der EP 0 167 377 A2 sind ein Verfahren und eine Vorrichtung zum Ablegen von faserverstärkten Bändern bekannt. Dabei wird das abzulegende Band mittels Infrarotstrahlung erwärmt und mittels einer starren Andruckrolle auf ein bereits abgelegtes Band oder auf eine Unterlage gepresst. Die Infrarotstrahlung wird dabei auf der der Andruckrolle abgewandten Seite des abzulegenden Bandes in etwa auf die Kontaktstelle zwischen abzulegendem Band und bereits abgelegtem Band / Unterlage gerichtet. Die Andruckrolle ist aus einem festen, mit gegenüber den benötigten Temperaturen stabilem Teflon beschichteten Material. Somit kann das faserverstärkte Band allein in einer Ebene zuverlässig konsolidiert werden. Eine Anpassung der Andruckrolle an gekrümmte Oberflächen ist nicht möglich.

Aus der US 5,078,821 sind ein Verfahren und eine Vorrichtung der eingangs genannten Art bekannt. Bei der Vorrichtung besteht das Andruckkissen aus einer flexiblen Blase, welche von einem metallischen Gewebe umgeben ist. Das metallische Gewebe stellt einen aufwändigen Schutz für die Blase dar, der zudem wegen seiner Steifigkeit nachteilig in Bezug auf die verarbeitbare Komplexität der Konturen des Bauteils ist. Um eine bessere Anpassung an komplexere Strukturen zu erhalten, wird als Alternative eine von der Andruckrolle getrennte Druckhaube vorgeschlagen, die mittels heißer druckbehafteter Luft ein durch die Andruckrolle aufgebrachtes Band erst hinreichend auf das Bauteil aufpresst.

Die EP 1 306 196 A1 offenbart eine Vorrichtung zum Verschweißen von Werkstücken, bei der mittels eines Anpressblockes, der auch in Form eines Kissens mit flexibler Folie vorliegen kann, ein erstes Werkstück auf ein zweites Werkstück gepresst wird. Mittels Laserstrahlung werden die beiden Werkstücke miteinander verschweißt. Hierfür sind sowohl der Anpressblock als auch eines der Werkstücke transparent für die Laserstrahlung, da ansonsten die Laserstrahlung die Schweißstelle nicht erreichen würde. Somit ist keine als Rolle ausgebildete Andruckeinheit offenbart, sondern ein blockartiges Element.

Die EP 0 861 715 A2 offenbart ein Verfahren und eine Vorrichtung zur Herstellung langer Kunststoffbahnen, wobei geschmolzener Kunststoff zwischen einer formgebenden Rolle und einer formgebenden Trommel hindurchgeführt wird. Die formgebende Trommel kann mit einem Fluid gefüllt sein, über dessen einstellbaren Druck der Anpressdruck zwischen Trommel und Rolle veränderbar ist.

Aus der US 6451152 B1 ist ein Verfahren zum Erhitzen eines automatisch abzulegenden ersten Werkstückes aus einem bandförmigen Verbundmaterial bekannt, welches mittels einer Andruckeinheit auf einem zweiten Werkstück fixiert wird und mittels Laserstrahlung auf seiner der Andruckeinheit abgewandten Seite erhitzt wird. Die Laserstrahlung entstammt dabei aus einer Laserdioden-Anordnung, die in unabhängig voneinander ansteuerbare Dioden-Gruppen aufgeteilt ist. Auf diese Weise können unterschiedliche Bereiche des ersten und/oder zweiten Werkstückes mit unterschiedlichen Strahlungsleistungen beaufschlagt werden. Außerdem können unterschiedliche Dioden-Gruppen unterschiedliche Wellenlängen des Laserlichts ausstrahlen, so dass in unterschiedlichen Bereichen der Werkstücke unterschiedliche Absorptionsraten für das Laserlicht bewirkt werden können.

Es ist nun Aufgabe der vorliegenden Erfindung, ein Verfahren und eine Vorrichtung der eingangs genannten Art zur Verfügung zu stellen, die die vorgenannten Nachteile nicht aufweisen, die also insbesondere ein Ablegen von thermoplastischem Material bei nahezu beliebigen Geometrien und bei einer möglichst homogenen Druckverteilung des Andruckkissens ermöglichen.

Bei einem Verfahren der eingangs genannten Art wird die Aufgabe durch die Merkmale des kennzeichnenden Teils des Anspruchs 1 gelöst.

Die Laserstrahlung ermöglicht sowohl hinsichtlich der im Werkstück zu erreichenden Temperatur als auch geometrisch eine gezielte Erhitzung des abzulegenden Materials oder auch der Ablageoberfläche des Bauteils. Dabei ist es vorteilhaft, die Laserstrahlung auf die von der Andruckeinheit abgewandte Seite des zwischen der Andruckeinheit und dem zweiten Werkstück angeordneten ersten Werkstückes zu richten. Hierdurch wird erreicht, dass die dem Andruckkissen zugewandte Seite des ersten Werkstückes weniger stark erhitzt und eine übermäßige Erhitzung des Andruckkissens über das abzulegende Werkstück vermieden wird. Da aber auch die Randbereiche des ersten Werkstückes hinreichend erhitzt werden müssen, lässt es sich in der Regel nicht vermeiden, dass ein Teil der Laserstrahlung am Werkstück vorbei unmittelbar auf das Andruckkissen trifft. Eine für das Andruckkissen schädliche Wirkung der Laserstrahlen wird nunmehr dadurch weitgehend vermieden, dass zumindest ein Bereich des Andruckkissens, der im Einsatz der Laserstrahlung ausgesetzt wird, für die eingesetzte Laserstrahlung transluzent ist und für die eingesetzte Laserstrahlung einen Absorptionskoeffizienten von höchstens 0,5, vorzugsweise höchstens 0,3, aufweist. Damit ist eine Kombination eines ein elastisch-flexibles Oberflächenmaterial aufweisenden Andruckkissens mit einer Laserbestrahlung zur Erwärmung des Werkstückmaterials möglich.

Ein Schutz des Andruckkissens kann zusätzlich beispielsweise dadurch erfolgen, dass das Andruckkissen gegen die Laserstrahlung abgeschattet wird. Hierfür kann eine für die eingesetzte Laserstrahlung nicht transparente Wand eingesetzt werden, die zwischen der Laserquelle und dem Andruckkissen angeordnet wird und die den Durchtritt des abzulegenden ersten Werkstückes erlaubt. Der Durchtritt kann durch eine torartige oder schlitzartige Öffnung realisiert werden, wobei das Wandelement an unterschiedliche Geometrien des abzulegenden ersten Werkstückes anpassbar ist oder zur Anpassung vollständig ausgetauscht wird.

Des Weiteren ist es vorteilhaft, im Andruckkissen ein Fluid vorzusehen. Das Fluid kann zur Kühlung des Andruckkissens verwendet werden, so dass ein weiterer Schutz gegen eine unerwünschte Erwärmung gegeben ist. Das Fluid kann während des Andrückens im Andruckkissen auf einen konstanten Temperaturwert geregelt werden. Die Fluidfüllung des Andruckkissens kann z.B. aus Luft oder einer Flüssigkeit, wie Öl, bestehen.

Ein weiterer Vorteil des Fluids ist, dass das Andruckkissen über nahezu den gesamten Kontaktbereich einen gleichmäßigen Druck auf das abzulegende Werkstück ausübt. Dies gilt insbesondere auch bei nicht ebenen Oberflächen. Wenn sich nämlich z.B. ein konvex gekrümmter Bereiche der Prepreg-Oberfläche in das Andruckkissen hineindrückt und ggf. dessen Volumen verkleinert, verteilt sich der dadurch erzeugte erhöhte Druck gleichmäßig auf das gesamte Andruckkissen.

Der Innendruck ist also zwar aufgrund des Fluids stets örtlich homogen verteilt, jedoch nicht zwangsläufig zeitlich konstant. Durch eine Regelung des Innendrucks der Andruckeinheit kann auch eine zeitliche Konstanz des Innendruckes des Andruckkissens erreicht werden. Damit ist auch der Anpressdruck entlang der parallel zur Drehachse des Andruckkissens verlaufenden Kontaktlinie des maximalen Anpressdruckes zwischen Andruckkissen und Prepregband zeitlich konstant.

Die Kühlung des Fluids kann außerhalb des Andruckkissens erfolgen. Durch einen ständigen Austausch des im Andruckkissen befindlichen Fluids wird dabei eine Kühlung auch des Andruckkissenmaterials erreicht. In entsprechender Weise kann das Andruckkissen auch erwärmt werden. Dies kann zum Beispiel sinnvoll sein, wenn ein anderweitiger Schutz vor der Laserstrahlung, z. B. durch Abschattung, hinreichend ist und ein erwärmtes Andruckkissen für den Andrückprozess vorteilhaft ist. Sowohl zur Kühlung als auch zur Erwärmung kann die Temperatur auf einen gewünschten Wert geregelt werden.

Die vorgenannte Aufgabe wird bei einer Vorrichtung der eingangs genannten Art durch die kennzeichnenden Merkmale des Anspruchs 3 gelöst.

Vorteilhafte Ausgestaltungen der Vorrichtung ergeben sich aus den Ansprüchen 4 bis 11.

Verbundmaterialien lassen sich aus den unterschiedlichsten Werkstoffen herstellen. Die zur Erhitzung optimalen Frequenzen der eingesetzten Laserstrahlung sowie deren Intensität sind von den beteiligten Werkstoffen abhängig und von daher vorgegeben. Soll für das Andruckkissen ein für die eingesetzte Laserstrahlung transluzentes oder teilabsorbierendes Material verwendet werden, ist es dem Fachmann möglich, ein für das Andruckkissen geeignetes Oberflächenmaterialien zu bestimmen, indem er aus dem Absorptionskoeffizienten, der Auftrefffläche der Laserstrahlung auf dem Andruckkissen, der Bestrahlungsdauer und der Energiedichte der eingesetzten Laserstrahlung die vom Andruckkissen aufgenommene Wärmeenergie und damit die sich dort lokal ergebende Temperatur errechnet oder abschätzt. Somit kann er ohne weiteres ein Oberflächenmaterial mit einem geeigneten Absorptionskoeffizienten wählen. Dabei ist ein Absorptionskoeffizient für die eingesetzte elektromagnetische Strahlung zu wählen, der höchstens 0,5, insbesondere höchstens 0,3 beträgt.

Bei folgender Kombination von Materialien und Verfahrensparametern konnte die Temperatur des Andruckkissens auf unter 130°C gehalten werden: Die als Rolle ausgebildete Andruckeinheit, dessen Andruckkissen aus ELASTOSIL® RT 625 (der Fa. Wacker Chemie) einen Durchmesser von 80 mm aufweist, wird im Einsatz mit einer Geschwindigkeit von 0,5 m/s relativ zu dem zu belegenden Werkstück bewegt, wobei das abzulegende Prepreg mit einer Breite von 6,3 mm mit einem Hochleistungs-Diodenlaser (Wellenlänge 808 nm) mit einem Brennfleck von 11 mm x 40 mm bei einer Flächenleistung von ca. 4 Watt pro mm² bestrahlt wird. Die Hälfte des Brennflecks, d.h. über die Länge von 20 mm, trifft auf das zu belegende Werkstück und die andere Hälfte auf das Prepreg und darüber hinaus auf das Andruckkissen. Mithin gelangen zwei Teilflächen des Brennflecks von insgesamt ca. 4,7 mm x 20 mm auf das Andruckkissen. Der Absorptionskoeffizient des Andruckkissenmaterials betrug 0,2. Beim Prepreg handelte es sich um eine mit Standard-Kohlenstofffasern versehene Matrix aus PEEK (Polyetheretherketon) mit einer Dicke von 0,1 mm.

In einem weiteren Andruckprozess wurde ein Andruckkissen des Durchmessers 60 mm verwendet und die Rolle mit einer Geschwindigkeit von 0,1 m/s bewegt. Die übrigen Prozessparameter blieben unverändert. Hierbei blieb die Temperatur der Andruckrolle unter 180°C.

Die erfindungsgemäße Vorrichtung kann auch so ausgebildet sein, dass das Andruckkissen zumindest zum Teil aus einem Elastomer oder einem sonstigen Material, das bei dem im Einsatz vorgesehenen Temperaturbereich elastomere Eigenschaften besitzt, besteht. Dabei kann das Material des Andruckkissens insbesondere Silikon sein. Alternativ können für das Material des Andruckkissens auch Polyurethane eingesetzt werden. Wichtig ist die elastische Flexibilität des Materials. Als elastisch wird hier jedes Material bezeichnet, welches ein E-Modul unter 40.000 N/mm² bei einer Materialtemperatur von 23° C besitzt, bzw. das sich bei Raumtemperatur und/oder den im Einsatz des Andruckkissens herrschenden Temperaturen wie ein Elastomer verhält.

In einer beanspruchten Variante umfasst die Andruckeinheit eine das Andruckkissen aufweisende Walze. Alternativ kann die Andruckeinheit aber auch zwei oder mehr in Vortriebsrichtung hintereinander liegende Walzen aufweisen, die vom Andruckkissen umfasst sind. Hierdurch erhält die Andruckeinheit eine raupenartige Struktur. Hierbei ist vorteilhaft, dass die Werkstücke anderes als bei einer einzelnen Walze nicht lediglich im Wesentlichen über eine mehr oder weniger in Vortriebsrichtung nur gering ausgedehnte Linie angepresst werden, sondern der Anpressdruck über einen gewissen, in Vortriebsrichtung ausgedehnten Anpressbereich aufrechterhalten werden kann. Auch bei dieser Ausführung kann das Andruckkissen fluidgefüllt sein, wobei der Anschluss für die Zu- und Abführung des Fluids in der Bewegung des Andruckkissens mitgeführt wird. Somit ist auch während des Vortriebs und Andrückens ein Austausch des Fluids und damit eine Druckregelung und/oder eine über das Fluid durchgeführte Regelung der Andruckkissentemperatur möglich.

Zumindest die in Vortriebsrichtung vordere Walze kann ebenfalls ein flexibel-elastisches Umfangsmaterial aufweisen. Sofern das äußere Andruckkissen zumindest zum Teil transluzent ist, kann auch für die Walzen eine Transluzenz und/oder zumindest ein niedriger Absorptionskoeffizient - wie oben für das Andruckkissen dargelegt - vorgesehen werden, um die Walze vor einer Temperaturerhöhung durch Auftreffen der Laserstrahlung zu schützen. Die Walzen oder auch nur einzelne davon können ebenfalls fluidgefüllt sein und über das Fluid gekühlt oder erwärmt werden, sofern notwendig auch mit Temperaturregelung. Des Weiteren kann eine Druckregelung vorgesehen sein.

Die Fluidfüllung des Andruckkissens sorgt für eine effektive Kühlmöglichkeit. Zudem sorgt der im Andruckkissen aufgrund der Fluidfüllung gleichmäßig verteilte Druck für eine entsprechend lokal gleichmäßig verteilte Anpresskraft. Im Falle der Druckregelung wird auch ein zeitlich konstanter Druck erreicht. Im Übrigen wird auf die das Andruckkissen betreffenden Ausführungen zur erfindungsgemäßen Vorrichtung verwiesen. Die Andruckeinheit kann auch bei Verfahren und Vorrichtungen zur Herstellung von Verbundwerkstoffbauteilen ohne Einsatz von Laserstrahlung verwendet werden.

Im Folgenden werden eine bevorzugte Ausführungsform des erfindungsgemäßen Verfahrens sowie eine Ausbildungsform der erfindungsgemäßen Vorrichtung anhand von Figuren dargestellt.

Es zeigt schematisch
- Fig. 1:: im seitlichen Querschnitt eine Andruckeinheit während des Andrückens eines Prepregbandes auf einer Ablage,
- Fig. 2:: im Längsquerschnitt eine Andruckeinheit im Einsatz und
- Fig. 3:: im Längsquerschnitt eine Andruckeinheit.
- Fig. 4:: im seitlichen Querschnitt eine Andruckeinheit während des Andrückens eines Prepregs unter Verwendung einer Laserblende,
- Fig. 5:: die Anordnung gemäß Fig. 4 in Rückansicht,
- Fig. 6:: eine Laserblende in einer ersten Ausgestaltung,
- Fig. 7:: eine Laserblende in einer alternativen Ausgestaltung mit Schlitz und
- Fig. 8:: im seitlichen Querschnitt eine raupenartige Andruckeinheit während des Andrückens eines Prepregs auf eine Ablage.

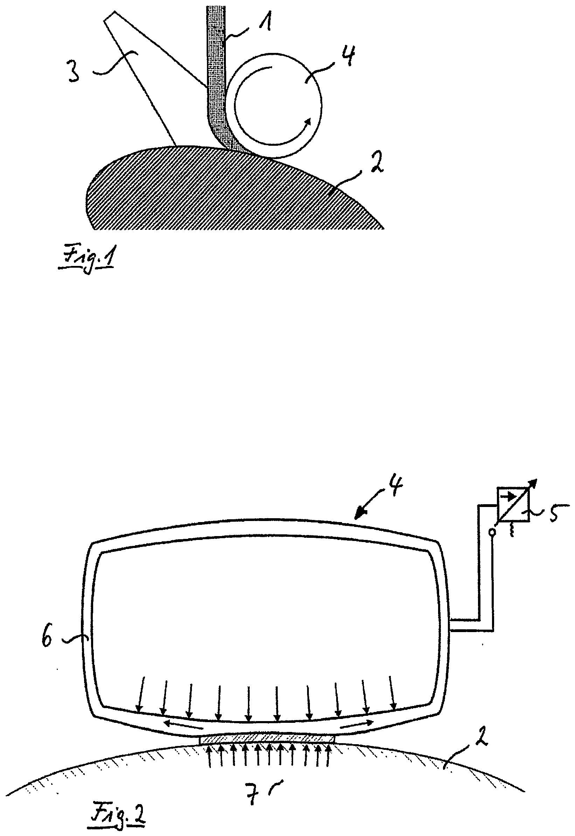

Fig. 1 zeigt schematisch ein Prepregband 1, das auf der Oberfläche eines Verbundwerkstoffbauteils 2 abgelegt wird. Hierfür werden das Prepregband 1 und das Verbundwerkstoffbauteil 2 mittels eines Laserstrahls 3 aus einer hier nicht dargestellten Laserstrahlquelle erhitzt. Auf der der Laserstrahlquelle abgewandten Seite des Prepregbandes 1 presst ein Andruckkissen 4 das Prepregband 1 auf das Verbundwerkstoffbauteil 2. Hierfür rotiert das Andruckkissen 4 in Pfeilrichtung um eine in Fig. 1 nicht dargestellte Welle. Das Andruckkissen 4 besteht aus Silikonkautschuk und darf Temperaturen von 215°C nicht übersteigen. Ansonsten schmilzt das Silikon und verliert seine für das Verfahren notwendigen Eigenschaften. Aufgrund der Bestrahlung des Prepregbandes 1 von der Unterseite her kann bei geeigneter Ablegegeschwindigkeit erreicht werden, dass das Prepregband 1 auf seiner Unterseite zwar die für die gewünschte Verbindung zwischen Prepregband 1 und Verbundwerkstoffbauteil 2 notwendige Temperatur erreicht, die mit dem Andruckkissen 4 in Kontakt stehende Seite des Prepregbandes 1 jedoch deutlich unterhalb der für das Andruckkissen 4 kritischen Temperatur bleibt.

Da das Prepregband 1 über seine gesamte Breite gleichmäßig mit der Laserstrahlung 3 beaufschlagt werden muss, kann nicht verhindert werden, dass Laserstrahlung am Prepregband 1 vorbei unmittelbar auf das Andruckkissen 4 fällt. Daher ist zu verhindern, dass die Laserstrahlung 3 das Andruckkissen 4 nicht über die kritische Temperatur erhitzt. Hierfür ist das Andruckkissen 4 für die eingesetzte Laserstrahlung 3 transluzent mit einem Absorptionskoeffizienten von 0,2 gestaltet.

Fig. 2 zeigt schematisch ein Andruckkissen 4 in Ablegerichtung im Querschnitt. Das Verbundwerkstoffbauteil 2 ist parallel zur Drehachse des Andruckkissens 4 konvex gekrümmt. Das Andruckkissen 4 ist mit Druckluft gefüllt, deren Druck mittels eines Druckbegrenzungsventils 5 geregelt wird. Alternativ kann auch ein Druckregelventil

eingesetzt werden. Das Kissenmaterial 6 ist z. B. Silikonkautschuk und damit flexibel elastisch. Somit kann sich das Andruckkissen 4 dem Verlauf der Oberfläche des Verbundwerkstoffbauteils 2 optimal anpassen. Aufgrund der Druckregelung ist jederzeit ein konstanter Innendruck für das Andruckkissen 4 gegeben. Damit ist auch der Anpressdruck, den das Andruckkissen 4 entlang der durch die Pfeile 7 gekennzeichneten Kontaktlinie auf die Oberfläche des Prepregbandes 1 ausübt, auf der gesamten auf das Prepregband 1 wirkenden Breite zeitlich weitgehend konstant. Diese Kontaktlinie des maximalen Anpressdruckes bewegt sich bei Vortrieb des Andruckkissens 4 über das Prepregband 1 hinweg.

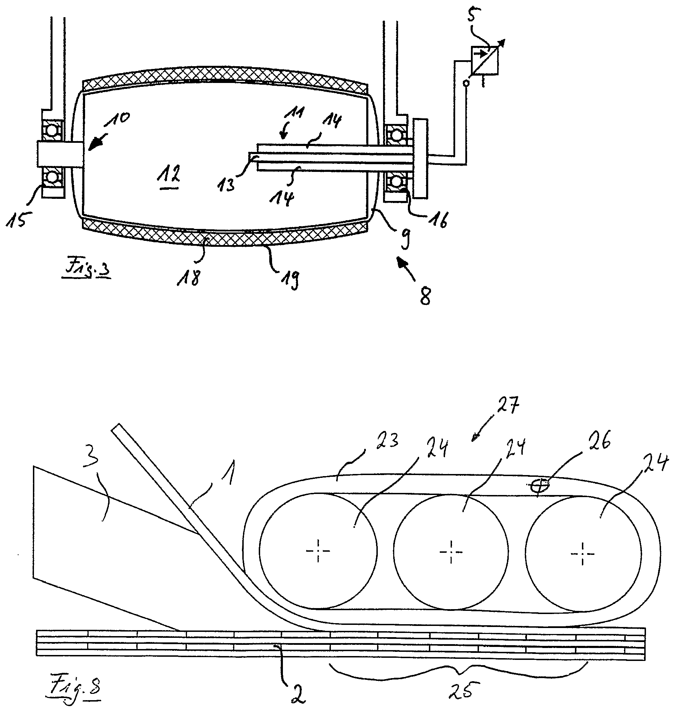

Fig. 3 zeigt ausschnittsweise eine Andruckeinheit 8 mit einem Andruckkissen 9, das an zwei Wellen 10 und 11 fixiert ist. Das Andruckkissen 9 weist eine Luftkammer 12 auf, die über eine Zuluftleitung 13 mit Druckluft versorgt wird. Um die Zuluftleitung 13 ist ringförmig eine Abluftleitung 14 gelegt. Zuluftleitung 13 und Abluftleitung 14 bilden gemeinsam die Welle 11. Die Wellen 10 und 11 sind drehbar in Kugellagern 15 und 16 gelagert. Ein nicht zur Gänze dargestelltes System zur Regelung der Druckluft in der Luftkammer 12 umfasst ein Druckbegrenzungsventil 5.

Das Andruckkissen 9 umfasst in Fig. 3 ein Grundmaterial 17 aus z. B. Silikon. Auf der Mantelfläche des Grundmaterials 17 ist eine Kautschukschicht 18 und auf der äußeren Mantelfläche der Kautschukschicht 18 wiederum ein Metallgewebe 19 aufgebracht. Das Metallgewebe 19 dient zur Begrenzung der Ausdehnung des Andruckkissens 9.

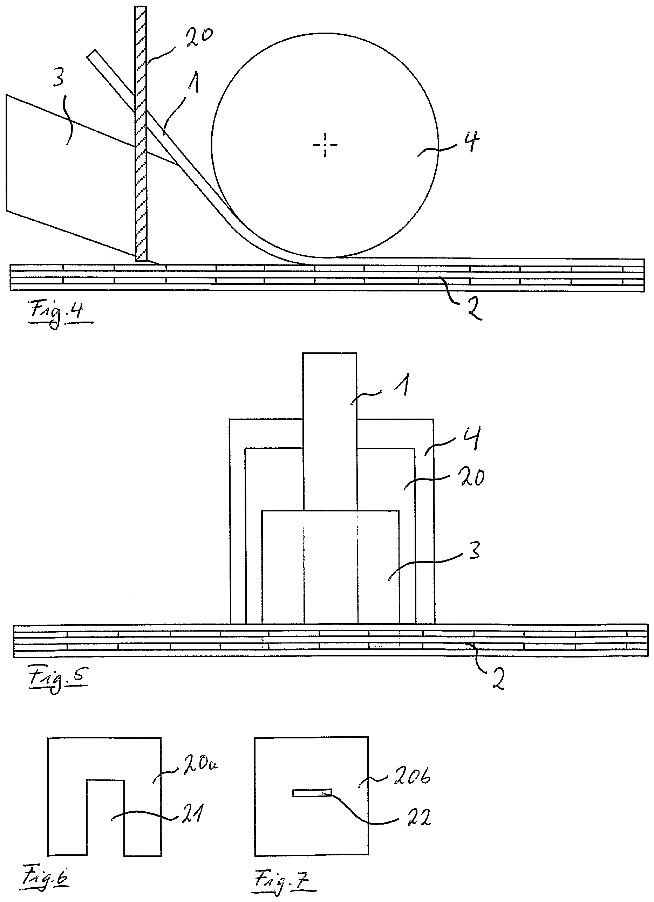

Fig. 4 zeigt eine Variante des Verfahrens sowie der Vorrichtung mit Abschattung des Laserstrahls 3. Zwischen dem Andruckkissen 4 und der nicht dargestellten Quelle für die Laserstrahlung 3 ist eine Laserblende 20 angeordnet, die dafür sorgt, dass keine oder möglichst wenig Laserstrahlung an dem abzulegenden Prepregband 1 vorbei auf das Andruckkissen 4 gelangen kann. Fig. 5 zeigt die Anordnung aus Richtung der nicht dargestellten Laserquelle.

Fig. 6 zeigt eine Laserblendenform 20 a mit einer torartigen Öffnung 21 für den Durchtritt des Prepregbandes 1. Fig. 7 zeigt eine alternative Laserblendenform 20 b mit einer schlitzförmigen Öffnung 22, durch die das Prepregband 1 geführt wird. Die Laserblenden 20 können leicht ausgetauscht werden, wodurch eine Anpassung an unterschiedliche Prepregbandgeometrien möglich ist. Alternativ können auch veränderbare Laserblenden verwendet werden.

Fig. 8 zeigt eine Andruckeinheit 27 mit einem Andruckkissen 23, das um drei Walzen 24 geführt ist. Hierdurch wird ein Anpressbereich 25 erzeugt, der gegenüber dem eines über eine einzelne Achse geführten Andruckkissens erheblich verlängert ist, was für den Anpressprozess vorteilhaft sein kann. Das Andruckkissen kann aus einem Vollmaterial bestehen oder auch fluidgefüllt sein. Bei einer Fluidfüllung kann das Innere des Andruckkissens 23 über einen Fluidanschluss 26 versorgt werden. Über einen ebenfalls mitlaufenden, hier aber nicht dargestellten Versorgungsschlauch kann der im Andruckkisseninneren gegebene Druck des Fluids oder auch dessen Temperatur durch außerhalb des Andruckkissens 23 befindliche hier nicht dargestellte Mittel verändert und auch geregelt werden.

Die Eigenschaften des Andruckkissens 23 können denen des in den Figuren 1 bis 7 dargestellten einachsigen Andruckkissens hinsichtlich Transluzenz und/oder Absorptionskoeffizient entsprechen. Bei zumindest zum Teil transluzentem Andruckkissen 23 kann zumindest die vorderste Walze 24 ebenfalls mit einem geringen Absorptionskoeffizienten versehen sein, um die Walze 24 vor einer Temperaturerhöhung aufgrund der auftreffenden Laserstrahlung 3 zu schützen.

Einzelne der Walzen 24 oder auch sämtliche können aus einem elastisch-flexiblen Material bestehen und/oder fluidgefüllt sein. Auch hier kann über das Fluid eine Kühlung oder Erwärmung sowie eine Regelung der Temperatur und/oder des Druckes mittels des Fluids erfolgen. Die Walzen können allerdings auch aus einem massiven Material bestehen. Während des Anpressens 1 kann der auf das abzulegende Prepregband 1 durch das Andruckkissen 23 ausgeübte Druck in den Bereichen zwischen den Walzen 24 leicht erniedrigt sein, da dort die Walzen 24 nicht unmittelbar aufliegen. Die Anpressdruck-Varianz kann erniedrigt werden, indem entsprechend geringe Durchmesser der Walzen 24 gewählt werden.

### Bezugszeichenliste

- 1.: Prepreg
- 2.: Verbundwerkstoffbauteil
- 3.: Laserstrahlung
- 4.: Andruckkissen
- 5.: Druckbegrenzungsventil
- 6.: Kissenmaterial
- 7.: Pfeile
- 8.: Andruckeinheit
- 9.: Andruckkissen
- 10.: Welle
- 11.: Welle
- 12.: Luftkammer
- 13.: Zuluftleitung
- 14.: Abluftleitung
- 15.: Kugellager
- 16.: Kugellager
- 17.: Grundmaterial
- 18.: Kautschukschicht
- 19.: Metallgewebe
- 20.: Laserblende
- 21.: torartige Öffnung
- 22.: schlitzförmige Öffnung
- 23.: Andruckkissen
- 24.: Walze
- 25.: Anpressbereich
- 26.: Fluidanschluss
- 27.: Andruckeinheit

## Patentansprüche

1. Verfahren zur Herstellung von Verbundwerkstoffbauteilen, bei dem ein erstes bandförmiges Werkstück (1) an einem zweiten Werkstück (2) fixiert wird, wobei die Werkstücke (1, 2) an der Verbindungsstelle mittels einer ein elastisch flexibles Andruckkissen (4, 23) aufweisenden, als Rolle ausgebildeten und relativ zum zweiten Werkstück (2) rollend bewegten Andruckeinheit (8, 27) aneinandergepresst werden, wobei
das bandförmige Werkstück (1) auf seiner der Andruckeinheit (8, 27) abgewandten Seite mittels Laserstrahlung (3) erhitzt wird und
das Andruckkissen (4) derart vom unmittelbaren Einfluss der Laserstrahlung (3) geschützt wird, dass die Temperatur des Andruckkissens (4, 23) nicht über einen für den Andrückprozess kritischen Wert erhöht wird,
**dadurch gekennzeichnet, dass**
das Andruckkissen (4, 23) derart gestaltet wird, dass zumindest ein Bereich des Andruckkissens (4, 23), der im Einsatz der Laserstrahlung (3) ausgesetzt wird, für die eingesetzte Laserstrahlung (3) transluzent ist und für die eingesetzte Laserstrahlung (3) einen Absorptionskoeffizienten von höchstens 0,5, vorzugsweise höchstens 0,3 aufweist.

2. Verfahren nach Anspruch 1, **dadurch gekennzeichnet, dass** das Andruckkissen (4, 23) gegen die Laserstrahlung (3) abgeschattet wird.

3. Vorrichtung zur Herstellung von Verbundwerkstoffbauteilen, umfassend eine als Rolle ausgebildete Andruckeinheit (8, 27) mit elastisch flexiblem Andruckkissen (4, 23), wobei
eine Laserstrahlungsquelle (3) und Schutzmittel zum Schutz des Andruckkissens (4, 23) vor einem unerwünscht hohen Einfluss der Laserstrahlung (3) auf die Temperatur des Andruckkissens (4, 23) vorgesehen sind,
**dadurch gekennzeichnet, dass**
als Schutzmittel zumindest ein Bereich des Andruckkissens (4, 23), der im Einsatz der Laserstrahlung (3) ausgesetzt ist, für die eingesetzte Laserstrahlung (3) transluzent ist und einen Absorptionskoeffizienten für die eingesetzte Laserstrahlung (3) von 0,5, vorzugsweise höchstens 0,3 aufweist.

4. Vorrichtung nach Anspruch 3, **dadurch gekennzeichnet, dass** als weiteres Schutzmittel Mittel zum Abschatten des Andruckkissens (4, 23) gegenüber der Laserstrahlung (3) vorgesehen sind.

5. Vorrichtung nach Anspruch 3 oder 4, **dadurch gekennzeichnet, dass** das Andruckkissen (4, 23) zumindest zum Teil aus einem Elastomer oder einem sonstigen Material, das bei dem im Einsatz vorgesehenen Temperaturbereich elastomere Eigenschaften besitzt, vorzugsweise aus Silikon besteht.

6. Vorrichtung nach einem der Ansprüche 3 bis 5, **dadurch gekennzeichnet, dass** das Andruckkissen (4, 23) mit einem Fluid gefüllt ist.

7. Vorrichtung nach Anspruch 6, **dadurch gekennzeichnet, dass** die Andruckeinheit (8, 27) im Einsatz um eine Welle (10, 11) rotierend geführt ist und die Versorgung des Andruckkissens (4, 23) mit dem Fluid durch die Welle (11) hindurch erfolgt.

8. Vorrichtung nach Anspruch 6 oder 7, **dadurch gekennzeichnet, dass** Mittel (5) zur Regelung des durch das Fluid ausgeübten Innendrucks des Andruckkissens (4, 23) und/oder Mittel zur Erwärmung oder Kühlung des im Andruckkissen (4, 23) vorhandenen Fluids vorgesehen sind.

9. Vorrichtung nach einem der Ansprüche 3 bis 8, **dadurch gekennzeichnet, dass** die Andruckeinheit (8) eine das Andruckkissen (4) aufweisende Walze ist.

10. Vorrichtung nach einem der Ansprüche 3 bis 8, **dadurch gekennzeichnet, dass** die Andruckeinheit (23) mindestens zwei in Vortriebsrichtung hintereinander liegende, von dem Andruckkissen (23) umfasste Walzen (24) aufweist.

11. Vorrichtung nach Anspruch 10, **dadurch gekennzeichnet, dass** zumindest die in Vortriebsrichtung gesehen vordere Walze (24) bereichsweise für die eingesetzte Laserstrahlung (3) transluzent oder reflektierend ist und/oder einen Absorptionskoeffizienten von höchstens 0,5, vorzugsweise 0,3 aufweist.

## Claims

1. Process for producing composite material components in which a first workpiece (1) in tape form is fixed on a second workpiece (2), the workpieces (1, 2) being pressed against each other at the connecting location by means of a pressure-exerting unit (8, 27) that has an elastically flexible pressure-exerting pad (4, 23), is formed as a roller and is moved in a rolling manner in relation to the second workpiece (2),
the workpiece (1) in tape form being heated on its side facing away from the pressure-exerting unit (8, 27) by means of laser radiation (3) and
the pressure-exerting pad (4) being protected from the direct influence of the laser radiation (3) in such a way that the temperature of the pressure-exerting pad (4, 23) is not increased above a value that is critical for the pressing process,
**characterized in that**
the pressure-exerting pad (4, 23) is made such that at least a region of the pressure-exerting pad (4, 23) that is exposed to the laser radiation (3) during use is translucent for the laser radiation (3) that is used and has for the laser radiation (3) that is used an absorption coefficient of at most 0.5, preferably at most 0.3.

2. Process according to Claims 1, **characterized in that** the pressure-exerting pad (4, 23) is shielded from the laser radiation (3).

3. Device for producing composite material components, comprising a pressure-exerting unit (8, 27) formed as a roller with an elastically flexible pressure-exerting pad (4, 23),
a laser radiation source (3) and protective means for protecting the pressure-exerting pad (4, 23) from an undesirably great influence of the laser radiation (3) on the temperature of the pressure-exerting pad (4, 23) being provided,
**characterized in that**
as protective means, at least a region of the pressure-exerting pad (4, 23) that is exposed to the laser radiation (3) during use use is translucent for the laser radiation (3) that is used and has an absorption coefficient for the laser radiation (3) that is used of 0.5, preferably at most 0.3.

4. Device according to Claims 3, **characterized in that**, as further protective means, means for shielding the pressure-exerting pad (4, 23) from the laser radiation (3) are provided.

5. Device according to Claims 3 or 4, **characterized in that** the pressure-exerting pad (4, 23) consists at least partly of an elastomer or of some other material that has elastomeric properties at the temperature range envisaged during use, preferably of silicone.

6. Device according to one of Claims 3 to 5, **characterized in that** the pressure-exerting pad (4, 23) is filled with a fluid.

7. Device according to Claim 6, **characterized in that** the pressure-exerting unit (8, 27) is guided in a rotating manner around a shaft (10, 11) during use and the pressure-exerting pad (4, 23) is supplied with the fluid through the shaft (11).

8. Device according to Claim 6 or 7, **characterized in that** means (5) for controlling the internal pressure of the pressure-exerting pad (4, 23) exerted by the fluid and/or means for heating or cooling the fluid present in the pressure-exerting pad (4, 23) are provided.

9. Device according to one of Claims 3 to 8, **characterized in that** the pressure-exerting unit (8) is a roller having the pressure-exerting pad (4).

10. Device according to one of Claims 3 to 8, **characterized in that** the pressure-exerting unit (23) has at least two rolls (24) lying one behind the other in the direction of advancement and enclosed by the pressure-exerting pad (23).

11. Device according to Claim 10, **characterized in that** at least the front roll (24), seen in the direction of advancement, is in certain regions translucent or reflective for the laser radiation (3) that is used and/or has an absorption coefficient of at most 0.5, preferably 0.3.

## Revendications

1. Procédé de fabrication d'éléments en matériau composite, dans lequel une première pièce en forme de bande (1) est fixée sur une seconde pièce (2), dans laquelle les pièces (1, 2) sont pressées l'une contre l'autre au point de liaison au moyen d'une unité de pression (8, 27) qui comporte un coussin de pression élastique (4, 23), est réalisée sous la forme d'un rouleau et est déplacée par roulement par rapport à la seconde pièce (2),
dans lequel la pièce en forme de bande (1) est chauffée par faisceau laser (3) sur sa face tournée à l'opposé de l'unité de pression (8, 27) et
le coussin de pression (4) est protégé contre l'influence directe du faisceau laser (3) de manière à ce que la température du coussin de pression (4, 23) ne s'élève pas au-dessus d'une valeur critique pour le processus de compression,
**caractérisé en ce que** le coussin de pression (4, 23) est conçu de manière à ce qu'au moins une région du coussin de pression (4, 23), qui est exposée au faisceau laser (3) en utilisation, soit translucide vis-à-vis du faisceau laser (3) utilisé et présente un coefficient d'absorption vis-à-vis du faisceau laser (3) utilisé d'au plus 0,5, de préférence d'au plus 0,3.

2. Procédé selon la revendication 1, **caractérisé en ce que** le coussin de pression (4, 23) est ombragé contre le faisceau laser (3).

3. Dispositif de fabrication d'éléments en matériau composite, comprenant une unité de pression (8, 27) sous la forme d'un rouleau comportant un coussin de pression (4, 23) élastique et flexible, dans lequel
il est prévu une source de faisceau laser (3) et des moyens de protection destinés à protéger le coussin de pression (4, 23) vis-à-vis d'une influence indésirablement élevée du faisceau laser (3) sur la température du coussin de pression (4, 23),
**caractérisé en ce qu'**en tant que moyen de protection, au moins une région du coussin de pression (4, 23), qui est exposée au faisceau laser (3) en utilisation, est translucide vis-à-vis du faisceau laser (3) utilisé et présente un coefficient d'absorption vis-à-vis du faisceau laser (3) utilisé de 0,5, de préférence d'au plus 0,3.

4. Dispositif selon la revendication 3, **caractérisé en ce qu'**il est prévu en tant qu'autres moyens de protection, des moyens pour ombrager le coussin de pression (4, 23) contre le faisceau laser (3).

5. Dispositif selon la revendication 3 ou 4, **caractérisé en ce que** le coussin de pression (4, 23) est constitué au moins en partie d'un élastomère ou d'un autre matériau de ce type ayant des propriétés élastomères dans la plage de températures prévue pour l'utilisation, de préférence en silicone.

6. Dispositif selon l'une des revendications 3 à 5, **caractérisé en ce que** le coussin de pression (4, 23) est rempli d'un fluide.

7. Dispositif selon la revendication 6, **caractérisé en ce que** l'unité de pression (8, 27) est guidée de manière à tourner autour d'un arbre (10, 11) lors de l'utilisation et **en ce que** le fluide est amené au coussin de pression (4, 23) par l'arbre (11).

8. Dispositif selon la revendication 6 ou 7, **caractérisé en ce qu'**il est prévu des moyens (5) pour réguler la pression interne du coussin de pression (4, 23) exercée par le fluide et/ou des moyens pour chauffer ou refroidir le fluide présent dans le coussin de pression (4, 23).

9. Dispositif selon l'une des revendications 3 à 8, **caractérisé en ce que** l'unité de pression (8) est un cylindre qui comporte le coussin de pression (4).

10. Dispositif selon l'une des revendications 3 à 8, **caractérisé en ce que** l'unité de pression (23) comporte au moins deux cylindres (24) disposés l'un derrière l'autre dans la direction de déplacement et entourés par le coussin (23) de pression.

11. Dispositif selon la revendication 10, **caractérisé en ce qu'**au moins le cylindre avant (24), vu dans la direction de déplacement, est translucide ou réfléchissant par endroits vis-à-vis du faisceau laser (3) utilisé et/ou présente un coefficient d'absorption d'au plus 0,5, de préférence de 0,3.
